# EUROPÄISCHE PATENTSCHRIFT

(11) **EP 2 307 320 B1**
(45) Veröffentlichungstag und Bekanntmachung des Hinweises auf die Patenterteilung: **07.09.2016**
(21) Anmeldenummer: 09777407.9
(22) Anmeldetag: 23.07.2009
(51) Int. Cl.: C02F 1/44, B01D 61/08, B01D 61/18, C02F 1/28

(54) **VORRICHTUNG UND VERFAHREN ZUR TRINKWASSERAUFBEREITUNG**
DEVICE AND METHOD FOR DRINKING WATER PURIFICATION
DISPOSITIF ET PROCÉDÉ DESTINÉS À LA PRÉPARATION D'EAU POTABLE

(30) Priorität: 25.07.2008 DE 102008034588
(43) Veröffentlichungstag der Anmeldung: 13.04.2011
(73) Patentinhaber: AQUA LIVING GmbH & Co.KG, 49492 Westerkappeln (DE)
(72) Erfinder: ZWINGER, Victor, 49492 Westerkappeln (DE)
(74) Vertreter: Deters, Frank
(86) Internationale Anmeldenummer: PCT/EP2009/005367
(87) Internationale Veröffentlichungsnummer: WO 2010/009888

(56) Entgegenhaltungen:
- FR-A- 2 895 917
- US-A- 4 842 724
- US-A- 5 296 148
- US-A1- 2007 144 952

## Beschreibung

Die Erfindung betrifft eine Vorrichtung und ein Verfahren zur Trinkwasseraufbereitung nach den Oberbegriffen der Ansprüche 1 und 10.

Derartige Vorrichtungen und Verfahren zur Trinkwasseraufbereitung sind zum Beispiel aus den Patentschriften US 4,842,724, US 5,296,148 und FR 2 895 917 bekannt. Sie arbeiten unabhängig von einem festen Wasseranschluss, indem das zu reinigende Trinkwasser in einen Wassertank der Vorrichtung eingefüllt und mittels einer Pumpe einer Membranfiltereinheit zugeführt wird. Der Wassertank, die Pumpe und die Membranfiltereinheit sind dabei über eine Wasserleitung miteinander verbunden. Die Membranfiltereinheit weist einen Wasserzulauf, einen Membranfilter, einen Reinwasserablauf und einen Spülwasserablauf auf. Das zu reinigende Trinkwasser wird aus dem Wassertank dem vor dem Membranfilter angeordneten Wasserzulauf zugeführt. Ein Teil des zugeführten Wassers wird durch den Membranfilter gepresst und verlässt den Membranfilter durch den Reinwasserablauf. Das übrige, der Membranfiltereinheit zugeführte Wasser wird zur Reinigung des Membranfilters verwendet und wird hierzu über die Oberfläche des Membranfilters geleitet. Dieses Spülwasser nimmt dabei auf der Oberfläche befindliche Ablagerungen mit und verlässt die Membranfiltereinheit über einen Spülwasserablauf. Das Verhältnis des Spülwassers zum aufgereinigten Wasser beträgt dabei etwa 4 zu 1. Wünschenswert wäre jedoch ein zu Gunsten des aufgereinigten Wassers verändertes Nutzungsverhältnis, um den Wassertank seltener nachfüllen zu müssen und die Bedienfreundlichkeit dadurch zu erhöhen. Auch die Reinigung und zu beachtende Sicherheitserfordernisse erschweren die Handhabung bekannter Vorrichtungen.

Der Erfindung liegt daher die Aufgabe zu Grunde, eine Vorrichtung und ein Verfahren zur Trinkwasseraufbereitung der eingangs genannten Art mit erhöhter Bedienfreundlichkeit bereitzustellen.

Die Erfindung löst diese Aufgabe durch eine Vorrichtung mit den Merkmalen des Anspruchs 1 und ein Verfahren mit den Merkmalen des Anspruchs 10. Weitere vorteilhafte Ausgestaltungen der Erfindung sind in den Unteransprüchen 2 bis 9 sowie 11 bis 15 enthalten.

Erfindungsgemäß ist der Spülwasserablauf über eine Wasserrückführleitung mit dem Wassertank verbunden. Das zur Spülung der Membranfilteroberfläche verwendete Spülwasser wird über die Wasserrückführleitung in den Wassertank zurückgeleitet und anschließend erneut dem Membranfilter zugeführt. Das in den Wassertank eingefüllte, zu reinigende Trinkwasser wird auf diese Weise mehrfach dem Membranfilter zugeführt und jedesmal wird ein Teil dieses Wassers durch den Membranfilter gepresst während der übrige zugeführte Teil des Wassers zur Spülung der Membranfilteroberfläche verwendet wird. Die Vorrichtung bildet ein in sich abgeschlossenes System und der Wassertank ist daher nicht zusätzlich mit einem Festwasseranschluss verbunden. Bereits aus diesem Grund ist es wünschenswert, einen möglichst hohen Anteil des in dem Wassertank zu reinigenden Trinkwassers der Vorrichtung oder dem Verfahren als aufgereinigtes Wasser entnehmen zu können und möglichst wenig des in den Wassertank gefüllten Wassers als Spülwasser entsorgen zu müssen. Werden beispielsweise 1,8 Liter Trinkwasser zur Aufbereitung in den Wassertank der Vorrichtung gegeben, werden durch die mehrfache Rückführung des Spülwassers in den Wassertank letztlich beispielsweise 1,4 Liter aufgereinigtes Wasser gewonnen und lediglich 400 ml Spülwasser bleiben zurück. Die Qualität des im Wassertank befindlichen Wassers verschlechtert sich dabei durch die sukzessive Aufkonzentrierung der enthaltenen Verunreinigungen zunehmend. Die Qualität des durch den Reinwasserablauf die Membranfiltereinheit verlassenden aufbereiteten Wassers ist jedoch stets gleich bleibend gut. Als zu reinigendes Wasser wird gewöhnliches Trinkwasser verwendet. Der Membranfilter hält störende Verunreinigungen, wie unerwünschte Ionen, Medikamentenrückstände, Pestizide, Herbizide, Hormone oder auch Reste von Kohlenwasserstoffmolekülen zurück, die im Trinkwasser enthalten sind oder sein können.

Der Wassertank ist zudem erfindungsgemäß zur Befüllung mit Trinkwasser aus der Vorrichtung entnehmbar. Der Wassertank wird dabei von der Pumpe und dem Filter separiert, zu einer Entnahmestelle des zu reinigenden Trinkwassers transportiert und dort mit dem Trinkwasser befüllt. Da der Wassertank nicht mit einem Festwasseranschluss verbunden ist, erleichtert diese Ausgestaltung die Befüllung des Wassertanks mit dem zu reinigenden Trinkwasser.

Erfindungsgemäß weist die Vorrichtung eine Nebenleitung auf, über die aus dem Wassertank von der Pumpe angesaugte Flüssigkeit in den Wassertank rückführbar ist, wobei die Nebenleitung mit einem Ventil verschließbar ausgebildet ist. Durch die Entnahme des Wassertanks aus der Vorrichtung und dem anschließenden Wiedereinsetzen des mit Wasser befüllten Tanks in die Vorrichtung befindet sich in der Wasserleitung zwischen dem Wassertank und der Pumpe Luft, die zum optimalen Betrieb der Vorrichtung zunächst entfernt werden sollte. Zur Entlüftung der Pumpe und/oder der Wasserleitung zwischen dem Wassertank und der Pumpe wird das von der Pumpe aus dem Wassertank angesaugte Wasser oder auch Wasser/Luft-Gemisch zunächst eine vorgegebene Zeit, bevorzugt 0,5 bis 10 Sekunden, vollständig in den Wassertank zurückgeleitet, ohne zuvor einen Filter zu durchströmen. Durch das Vorsehen der Nebenleitung, ist eine einfach Entlüftung der Pumpe sowie der Wasserleitung zwischen dem Wassertank und der Pumpe möglich, ohne in dem Wassertank befindliches Wasser zu verlieren.

Mit Vorteil ist in Fließrichtung des Wassers zwischen Spülwasserablauf und Wassertank ein Rückschlagventil angeordnet. Hierdurch wird erreicht, dass kein Wasser aus dem Wassertank über den Spülwasserablauf entgegen der geplanten Spülrichtung in die Membranfiltereinheit strömt.

In einer besonders bevorzugten Ausgestaltung der Erfindung weist die Vorrichtung einen Keramikfilter auf, der in Fließrichtung des Wassers hinter dem Reinwasserablauf der Membranfiltereinheit angeordnet ist. Das aufzureinigende Wasser durchströmt somit zunächst den Membranfilter und anschließend den Keramikfilter. Überraschenderweise hat sich gezeigt, daß die Nachschaltung eines Keramikfilters hinter dem Membranfilter den Geschmack des erhaltenen Wassers weiter verbessert. Zudem werden bei unsachgemäßer Benutzung sich im Membranfilter unter Umständen entwickelte Mikroorganismen vom Keramikfilter zurückgehalten und gelangen so nicht in das der Vorrichtung zu entnehmende Reinwasser.

Weiterhin ist dem Membranfilter ein Aktivkohlefilter vorgeschaltet. Mit Vorteil kann der Aktivkohlefilter vom hydraulischen Fluss abgetrennt werden. Hierzu weist die Vorrichtung eine Bypassleitung und ein Ventil auf, insbesondere ein Dreiwegeventil, mit deren Hilfe der Aktivkohlefilter überbrückbar und vollständig vom hydraulischen Fluss abtrennbar ist. Unter dem hydraulischen Fluss wird hierbei der während des Vorgangs der Wasseraufbereitung erfolgende Fluss des aufzubereitenden Wassers durch die Filter verstanden. Die Möglichkeit einer Abtrennung des Aktivkohlefilters erlaubt eine Reinigung der Flächen aller übrigen Bauteile, die mit Wasser in Berührung kommen, mit einem Reinigungsmittel, insbesondere mit einem Oxidationsmittel, wie beispielsweise Wasserstoffperoxid. Das Reinigungsmittel würde anderenfalls den Aktivkohlefilter zerstören, so dass eine Reinigung der Vorrichtung nicht möglich wäre.

In einer vorteilhaften Ausgestaltung der Erfindung weist die Vorrichtung in Fließrichtung des Wassers zwischen Spülwasserablauf und Wassertank und/oder hinter dem letzten Filter einen Leitwertsensor zur Ermittlung der Leitfähigkeit des Wassers auf. Mit Hilfe der Leitwertsensoren kann die Qualität des die Vorrichtung verlassenden Reinwassers überprüft und gegebenenfalls auf einem Display für den Verbraucher angezeigt werden. Durch den zwischen dem Spülwasserablauf und dem Wassertank angeordneten Leitwertsensor kann zudem der Verschmutzungsgrad des Spülwassers gemessen und ebenfalls gegebenenfalls angezeigt werden. Eine ordnungsgemäße Funktionsweise der Vorrichtung kann so in einfacher Weise gemessen und auf einem Display angezeigt werden.

In einer besonders bevorzugten Ausgestaltung der Erfindung ist die Wasserleitung zwischen dem Wassertank und dem Membranfilter über ein zu öffnendes Ventil mit einer Druckentlastungsöffnung entspannbar. Das Ventil ist dabei besonders bevorzugt zwischen der Pumpe und dem ersten Filter angeordnet. Mit Vorteil ist die Druckentlastungsöffnung über eine Druckentlastungsleitung mit einer Eintrittsöffnung zum Wassertank verbunden, die unterhalb eines für einen Betrieb der Vorrichtung erforderlichen, minimalen Wasserspiegels im Wassertank angeordnet ist. Nach Beendigung der Wasseraufbereitung stehen die wasserführenden Teile der Vorrichtung noch unter einem vom Umgebungsdruck abweichenden Druck. Durch eine direkte Verbindung der unter Über- oder Unterdruck befindlichen Wasserleitung mit der Umgebung oder aber mit dem Wassertank wird die Wasserleitung entspannt. Hierbei spritzt in der Regel Wasser aus der Druckentlastungsöffnung. Durch die optionale Verbindung der Druckentlastungsöffnung mit der Eintrittsöffnung, spritzt das Wasser in den Wassertank und die Umgebung der Vorrichtung bleibt trocken. Da die Eintrittsöffnung zudem unterhalb des Wasserspiegels angeordnet ist, wird ein Spritzen von Wasser aus dem Tank heraus zusätzlich verhindert.

In einer vorteilhaften Ausgestaltung der Erfindung weist die Vorrichtung eine Sicherheitseinrichtung zur automatischen Abschaltung der Pumpe auf. Die Sicherheitseinrichtung umfasst einen Sensor zur Messung des Stromverbrauchs der Pumpe und eine Steuerung, die die Pumpe bei einem vorgegebenen Verlauf des Stromverbrauchs abschaltet. Während die Pumpe Wasser aus dem Wassertank ansaugt und durch den Membranfilter presst, ist der Stromverbrauch der Pumpe nahezu konstant. Die im Wassertank befindliche Wassermenge nimmt dabei kontinuierlich ab, bis eine untere Grenze erreicht ist, in der eine Austrittsöffnung, durch die das Wasser den Wassertank verlässt, oberhalb des Wasserspiegels des noch im Wassertank verbliebenen Wassers liegt. Die Pumpe saugt dann Luft an. Der Stromverbrauch der Pumpe nimmt dabei sehr schnell ab. Anschließend muss jedoch die Luft im Abschnitt zwischen der Pumpe und dem Membranfilter komprimiert werden und der Stromverbrauch der Pumpe steigt plötzlich wieder stark an. Die Steuerung erkennt diesen charakteristischen Kurvenverlauf und schaltet daraufhin die Pumpe ab.

Mit Vorteil weist die Vorrichtung ergänzend oder alternativ zu vorgenannter Sicherheitseinrichtung eine Zeitsteuerung auf, die die Pumpe automatisch nach Ablauf eines vorgegebenen Zeitintervalls beginnend mit der Einschaltung der Pumpe wieder abschaltet. Da der Wassertank lediglich eine begrenzte Kapazität zur Aufnahme von zu reinigendem Wasser aufweist, benötigt die Vorrichtung eine vorbekannte Dauer zur Aufarbeitung der maximal im Wassertank befindlichen Wassermenge. Die Zeitsteuerung schaltet dann nach Ablauf dieser Zeit automatisch ab und verhindert so einen unbeabsichtigten Leerlauf der Pumpe über eine längere Zeit. Die Pumpe könnte anderenfalls Schaden nehmen und würde zudem unnötige Energie verbrauchen.

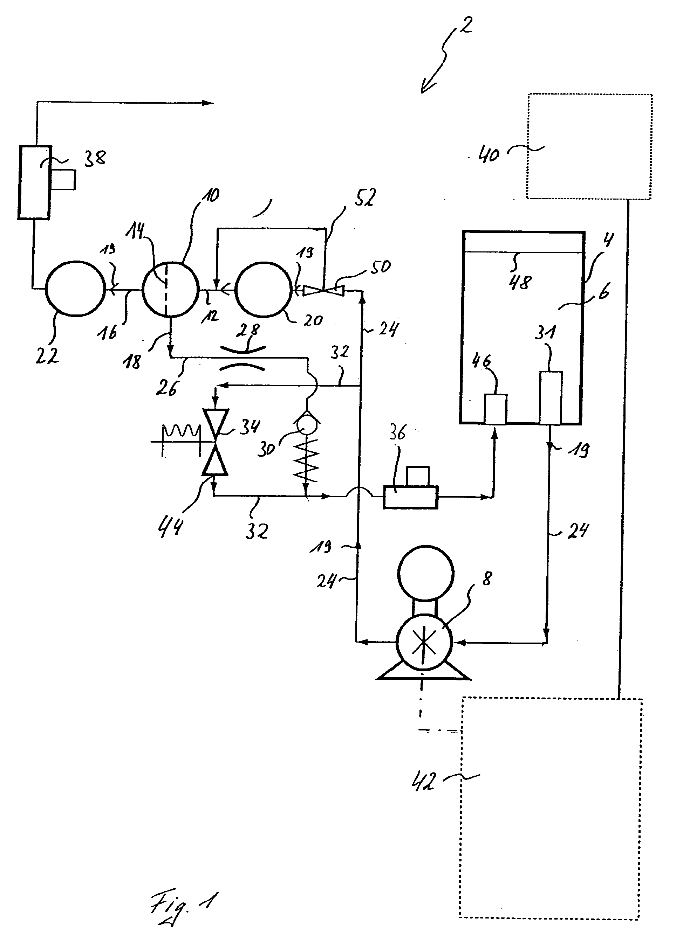

Weitere vorteilhafte Ausgestaltungen und Einzelheiten der Erfindung sind anhand des in Fig. 1 dargestellten hydraulischen Schaltplans eines Ausführungsbeispiels der erfindungsgemäßen Vorrichtung sowie des erfindungsgemäßen Verfahrens näher erläutert. Nachfolgend werden dabei gleichwirkende Elemente des Schaltplans mit einer einheitlichen Bezugsziffer versehen, sofern dies sinnvoll ist. Sämtliche nachfolgend beschriebene Merkmale des Ausführungsbeispiels können einzelnd oder auch in beliebiger Kombination mit weiteren beschriebenen Merkmalen Gegenstand der Erfindung sein.

Fig. 1 zeigt einen hydraulischen Schaltplan einer erfindungsgemäßen Vorrichtung 2, mit einem Wassertank 4 zur Aufnahme des zu reinigenden Trinkwassers 6, einer Pumpe 8 zum Transport des Wassers und einer Membranfiltereinheit 10. Die Membranfiltereinheit weist einen Wasserzulauf 12, einen Membranfilter 14, einen Reinwasserablauf 16 und einen Spülwasserablauf 18 auf. Der Membranfiltereinheit 10 ist in Fließrichtung 19, dargestellt durch Pfeile im hydraulischen Schaltplan, ein Aktivkohlefilter 20 vorgeschaltet und ein Keramikfilter 22 nachgeschaltet. Der Wasserzulauf 12 der Membranfiltereinheit 10 wird aus dem Wassertank 4 über eine Zuleitung 24 mittelbar nach Durchströmen des Aktivkohlefilters 20 gespeist. Der Wasserzulauf 12 ist dabei in Fließrichtung 19 vor dem Membranfilter 14 angeordnet. Das zu reinigende Wasser durchströmt teilweise den Membranfilter 14 und verlässt die Membranfiltereinheit 10 durch den Reinwasserablauf 16, der in Fließrichtung 19 hinter dem Membranfilter 14 angeordnet ist. Der übrige Teil des durch den Wasserzulauf 12 dem Membranfilter 14 zugeführten Wassers wird zur Beseitigung von Ablagerungen über die Membranfilteroberfläche geleitet und verlässt die Membranfiltereinheit 10 anschließend über den Spülwasserablauf 18. Der Spülwasserablauf 18 ist mit dem Wassertank 4 über eine Wasserrückführleitung 26 verbunden. Zur Aufrechterhaltung eines erhöhten Druckes in der Membranfiltereinheit 10 ist in die Wasserrückführleitung 26 ein Drosselventil 28 zur Reduzierung des Druckes eingebaut. Zudem weist die Wasserrückführleitung 26 ein Rückschlagventil 30 auf, das vom Spülwasser durchströmt wird, bevor das Wasser zurück in den Wassertank 4 fließt.

Die Vorrichtung ist als Auftischgerät, zur Platzierung auf einem Tisch oder einer Anrichte ohne einen Festwasseranschluss ausgebildet. Zur leichteren Befüllung des Wassertanks 4 mit dem zu reinigenden Wasser 6 ist der Wassertank 4 aus der Vorrichtung 2 entnehmbar.

Nach dem Wiedereinsetzen des befüllten Wassertanks 4 in die Vorrichtung 2 befindet sich in der Zuleitung 24 Luft. Um diese zu entfernen, ist die aus dem Wassertank 4 über eine Austrittsöffnung 31 von der Pumpe 8 angesaugte Flüssigkeit über eine Nebenleitung 32 in den Wassertank 4 rückführbar. Sobald die Luft aus der Zuleitung 24 auf diese Weise entfernt wurde, wird die Nebenleitung 32 mit einem Ventil 34, insbesondere einem Magnetventil verschlossen, und das Wasser strömt statt durch die Nebenleitung 32 nunmehr durch die Filter 20, 14, 22. Nun beginnt die eigentliche Aufbereitung des Wassers.

Zur Überprüfung der Qualität des über die Wasserrückführleitung 26 in den Wassertank 4 zurückgeleiteten Wassers weist die Vorrichtung 2 einen ersten Leitwertsensor 36 auf. Zusätzlich ist in Fließrichtung 19 hinter dem Keramikfilter 22 ein weiterer Leitwertsensor 38 angeordnet, der den Leitwert des die Vorrichtung 2 verlassenden, aufbereiteten Wassers misst. Die Reinheit oder aber auch der Verschmutzungsgrad kann über den gemessenen Leitwert ermittelt werden und wird im Ausführungsbeispiel auf einem Display 40 angezeigt.

Die Vorrichtung 2 weist eine Sicherheitseinrichtung zur automatischen Abschaltung der Pumpe 8 auf. Die Sicherheitseinrichtung umfasst einen Sensor, im Schaltplan nicht dargestellt, zur Messung des Stromverbrauchs der Pumpe 8 und eine Steuerung 42. Bei einem vorgegebenen Verlauf des Stromverbrauchs der Pumpe 8 wird diese durch die Steuerung 42 automatisch abgeschaltet.

Nach Beendigung der Wasseraufbereitung kann sich ein vom Umgebungsdruck abweichender Druck in den Wasserleitungen, wie der Zuleitung 24, befinden. Zur Druckentlastung ist die Zuleitung 24 zwischen dem Wassertank 4 und dem Membranfilter 14 über ein zu öffnendes Ventil mit einer Druckentlastungsöffnung 44 entspannbar. Im Ausführungsbeispiel wird hierzu die Nebenleitung 32 mit dem Ventil 34 verwendet. Es ist jedoch auch ein separates Ventil zur Druckentlastung denkbar. Die Druckentlastungsöffnung 44 ist über eine Druckentlastungsleitung, die im Ausführungsbeispiel mit der Nebenleitung 32 identisch ist, mit einer Eintrittsöffnung 46 zum Wassertank 4 verbunden. Die Eintrittsöffnung 46 ist dabei unterhalb eines für einen Betrieb der Vorrichtung 2 erforderlichen, minimalen Wasserspiegels 48 im Wassertank 4 angeordnet. Hierdurch wird ein Spritzen von Wasser bei einer Druckentlastung verhindert.

Der zwischen dem Wassertank 4 und der Membranfiltereinheit 10 angeordnete Aktivkohlefilter 20 ist über ein Ventil 50 und einer Bypassleitung 52 überbrückbar und vollständig vom hydraulischen Fluss abtrennbar.

## Patentansprüche

1. Vorrichtung (2) zur Trinkwasseraufbereitung, mit einem zur Befüllung mit Wasser aus der Vorrichtung (2) entnehmbaren Wassertank (4) zur Aufnahme des zu reinigenden Trinkwassers (6), einer Pumpe (8) zum Transport des Wassers und einer Membranfiltereinheit (10), die einen Wasserzulauf (12), einen Membranfilter (14), einen Reinwasserablauf (16), einen Spülwasserablauf (18) und eine Wasserrückführleitung (26) aufweist, die den Spülwasserablauf (18) mit dem Wassertank (4) verbindet, wobei der Wasserzulauf (12) aus dem Wassertank (4) über eine Zuleitung (24) mittelbar oder unmittelbar mit Wasser gespeist wird und in Fließrichtung (19) vor dem Membranfilter (14) angeordnet ist, der Reinwasserablauf (16) in Fließrichtung (19) hinter dem Membranfilter (14) angeordnet ist und ein Teil des durch den Wasserzulauf (12) der Membranfiltereinheit (10) zugeführten Wassers die Membranfiltereinheit (10) über den Spülwasserablauf (18) verlässt, und wobei dem Membranfilter (14) ein Aktivkohlefilter (20) vorgeschaltet ist, **dadurch gekennzeichnet, dass** ein Teil des durch den Wasserzulauf (12) der Membranfiltereinheit (10) zugeführten Wassers zur Beseitigung von Ablagerungen über die Membranfilteroberfläche geleitet wird und aus dem Wassertank (4) von der Pumpe (8) angesaugte Flüssigkeit (6) über eine Nebenleitung (32) in den Wassertank (4) rückführbar ist, wobei die Abzweigung in die Nebenleitung (32) vor den Filtern (20, 14) angeordnet ist und die Nebenleitung (32) mit einem Ventil (34) verschließbar ist.

2. Vorrichtung (2) nach einem der vorhergehenden Ansprüche, **dadurch gekennzeichnet, dass** in Fließrichtung (19) des Wassers zwischen Spülwasserablauf (18) und Wassertank (4) ein Rückschlagventil (30) angeordnet ist.

3. Vorrichtung (2) nach einem der vorhergehenden Ansprüche, **dadurch gekennzeichnet, dass** die Vorrichtung (2) einen Keramikfilter (22) aufweist, der in Fließrichtung (19) des Wassers hinter dem Reinwasserablauf (16) der Membranfiltereinheit (10) angeordnet ist.

4. Vorrichtung (2) nach einem der vorhergehenden Ansprüche, **dadurch gekennzeichnet, dass** in Fließrichtung (19) des Wassers zwischen Spülwasserablauf (18) und Wassertank (4) und/oder hinter dem letzten Filter (22) ein Leitwertsensor (36, 38) zur Ermittlung der Leitfähigkeit des Wassers angeordnet ist.

5. Vorrichtung (2) nach einem der vorhergehenden Ansprüche, **dadurch gekennzeichnet, dass** die Zuleitung (24) zwischen dem Wassertank (4) und dem Membranfilter (14) über ein zu öffnendes Ventil (34) mit einer Druckentlastungsöffnung (44) entspannbar ist.

6. Vorrichtung (2) nach Anspruch 5 **dadurch gekennzeichnet, dass** die Druckentlastungsöffnung (44) über eine Druckentlastungsleitung (32) mit einer Eintrittsöffnung (46) zum Wassertank (4) verbunden ist, die unterhalb eines für einen Betrieb der Vorrichtung (2) erforderlichen, minimalen Wasserspiegels (48) im Wassertank (4) angeordnet ist.

7. Vorrichtung (2) nach einem der vorhergehenden Ansprüche, **dadurch gekennzeichnet, dass** die Vorrichtung (2) eine Sicherheitseinrichtung zur automatischen Abschaltung der Pumpe (8) aufweist, die einen Sensor zur Messung des Stromverbrauchs der Pumpe (8) und eine Steuerung (42) umfasst, die die Pumpe (8) bei einem vorgegebenen Verlauf des Stromverbrauchs abschaltet.

8. Vorrichtung (2) nach einem der vorhergehenden Ansprüche, **gekennzeichnet durch** eine Zeitsteuerung, die die Pumpe (8) automatisch nach Ablauf eines vorgegebenen Zeitintervalls wieder abschaltet.

9. Vorrichtung (2) nach einem der vorhergehenden Ansprüche, **dadurch gekennzeichnet, dass** zwischen dem Wassertank (4) und der Membranfiltereinheit (10) ein Aktivkohlefilter (20) angeordnet ist, der über ein Ventil (50) und eine Bypassleitung (52) überbrückbar und vollständig vom hydraulischen Fluss abtrennbar ist.

10. Verfahren zur Trinkwasseraufbereitung, bei dem in einem Wassertank (4) bevorratetes, zu reinigendes Trinkwasser (6) durch einen Aktivkohlefilter (20) geleitet und danach einem Membranfilter (14) zugeführt wird, ein Teil des Wassers durch den Membranfilter (14) gepresst wird, wobei der Wassertank (4) zur Befüllung mit Wasser von einer Pumpe (8) und den Filtern (14) separiert, zu einer Entnahmestelle für das zu reinigende Wasser transportiert und dort mit dem Wasser befüllt wird, **dadurch gekennzeichnet, dass** der verbleibende Teil des zugeführten Wassers die dem zu reinigenden Wasser zugewandte Seite der Membranfilteroberfläche spült und das zur Spülung der Membranfilteroberfläche verwendete Wasser in den Wassertank (4) zurückgeleitet und erneut dem Membranfilter (14) zugeführt wird, wobei das von der Pumpe (8) aus dem Wassertank (4) angesaugte Wasser zur Entlüftung der Pumpe (8) und/oder einer Wasserleitung (24) zwischen dem Wassertank (4) und der Pumpe (8) zunächst eine vorgegebene Zeit vollständig über eine Nebenleitung (32) in den Wassertank (4) zurückgeleitet wird, ohne zuvor einen der Filter (20, 14) zu durchströmen.

11. Verfahren nach Anspruch 10, **dadurch gekennzeichnet, dass** das zu reinigende Wasser (6) zunächst einen Aktivkohlefilter (20), dann den Membranfilter (14) und anschließend einen Keramikfilter (22) durchströmt.

12. Verfahren nach Anspruch 11, **dadurch gekennzeichnet, dass** der Aktivkohlefilter (20) zur Reinigung der Flächen aller übrigen Bauteile (4, 24, 8, 14, 22, 36, 38, 32, 34), die mit dem Wasser (6) in Berührung kommen, vom hydraulischen Fluss abgetrennt wird.

13. Verfahren nach einem der Ansprüche 10 bis 12, **dadurch gekennzeichnet, dass** die Reinheit des den Membranfilter (14) durchströmten Wassers und/oder des Spülwassers durch Leitfähigkeitssensoren (36, 38) gemessen und die Messdaten verwertet werden.

14. Verfahren nach einem der Ansprüche 10 bis 13, **dadurch gekennzeichnet, dass** nach Beendigung der Wasseraufbereitung im Aufbereitungssystem (2) noch vorhandener Überdruck und/oder Unterdruck durch Öffnen einer Leitung (32) abgelassen wird, die einen Teil des unter Druck befindlichen Wassers unterhalb des Wasserspiegels (48) des noch im Wassertank (4) befindlichen Wassers (6) in den Wassertank (4) einleitet.

15. Verfahren nach einem der Ansprüche 10 bis 14, **dadurch gekennzeichnet, dass** der Stromverbrauch der Pumpe (8) während des Vorgangs der Wasseraufbereitung gemessen wird und die Pumpe (8) bei einem vorgegebenen Verlauf des Stromverbrauchs automatisch abgeschaltet wird.

## Claims

1. Device (2) for treating drinking water, comprising a water tank (4), which can be removed from the device (2) in order to be filled with water, for receiving the drinking water (6) to be purified, a pump (8) for transporting the water, and a membrane filter unit (10) which comprises a water inlet (12), a membrane filter (14), a clean water outlet (16), a flushing water outlet (18), and a water return line (26) which connects the flushing water outlet (18) to the water tank (4), the water inlet (12) being supplied directly or indirectly with water from the water tank (4) via a supply line (24) and being arranged upstream of the membrane filter (14) in the flow direction (19), the clean water outlet (16) being arranged downstream of the membrane filter (14) in the flow direction (19), and a portion of the water supplied to the membrane filter unit (10) via the water inlet (12) leaving the membrane filter unit (10) via the flushing water outlet (18), and an activated carbon filter (20) being connected upstream of the membrane filter (14), **characterised in that** a portion of the water supplied to the membrane filter unit (10) via the water inlet (12) is conveyed over the membrane filter surface in order to remove deposits, and fluid (6) removed by suction from the water tank (4) by means of the pump (8) can be returned to the water tank (4) via a bypass line (32), the branching in the bypass line (32) being arranged upstream of the filters (20, 14) and it being possible to close the bypass line (32) by means of a valve (34).

2. Device (2) according to the preceding claim, **characterised in that** a check valve (30) is arranged between the flushing water outlet (18) and the water tank (4) in the flow direction (19) of the water.

3. Device (2) according to either of the preceding claims, **characterised in that** the device (2) comprises a ceramic filter (22) which is arranged downstream of the clean water outlet (16) of the membrane filter unit (10) in the flow direction (19) of the water.

4. Device (2) according to any of the preceding claims, **characterised in that** a conductivity sensor (36, 38) for determining the conductivity of the water is arranged between the flushing water outlet (18) and the water tank (4) and/or downstream of the final filter (22) in the flow direction (19) of the water.

5. Device (2) according to any of the preceding claims, **characterised in that** the supply line (24) between the water tank (4) and the membrane filter (14) can be relieved by means of a valve (34) to be opened having a pressure-relief opening (44).

6. Device (2) according to claim 5, **characterised in that** the pressure-relief opening (44) is connected to an inlet opening (46) into the water tank (4) via a pressure-relief line (32), which opening is arranged in the water tank (4) below a minimum water level (48) required for the device (2) to operate.

7. Device (2) according to any of the preceding claims, **characterised in that** the device (2) comprises a safety device for automatically switching off the pump (8), which safety device comprises a sensor for measuring the current consumption of the pump (8), and comprises a control unit (42) that switches off the pump (8) when the current consumption has a predetermined course.

8. Device (2) according to any of the preceding claims, **characterised by** a time control that switches off the pump (8) again automatically after a predetermined time interval has elapsed.

9. Device (2) according to any of the preceding claims, **characterised in that** an activated carbon filter (20) is arranged between the water tank (4) and the membrane filter unit (10) and can be bypassed and completely separated from the hydraulic flow by means of a valve (50) and a bypass line (52).

10. Method for treating drinking water, in which drinking water (6) to be purified that is stored in a water tank (4) is guided through an activated carbon filter (20) and then supplied to a membrane filter (14), a portion of the water is pushed through the membrane filter (14), the water tank (4) being separated from a pump (8) and the filters (14) in order to be filled with water, being transported to a removal point for the water to be purified, and being filled with water here, **characterised in that** the remaining portion of the supplied water flushes the side of the membrane filter surface that faces the water to be purified, and the water used for flushing the membrane filter surface is conveyed back into the water tank (4) and is supplied again to the membrane filter (14), all of the water removed by suction from the water tank (4) by means of the pump (8) first being conveyed back into the water tank (4) via a bypass line (32) for a predetermined time in order to vent the pump (8) and/or a water line (24) between the water tank (4) and the pump (8), without the water previously flowing through one of the filters (20, 14).

11. Method according to claim 10, **characterised in that** the water (6) to be purified first flows through an activated carbon filter (20), then through the membrane filter (14), and subsequently through a ceramic filter (22).

12. Method according to claim 11, **characterised in that** the activated carbon filter (20) is separated from the hydraulic flow in order to purify the surfaces of all the remaining components (4, 24, 8, 14, 22, 36, 38, 32, 34) which come into contact with the water (6).

13. Method according to any of claims 10 to 12, **characterised in that** the purity of the water flowing through the membrane filter (14) and/or the purity of the flushing water is measured by conductivity sensors (36, 38) and the measurement data are evaluated.

14. Method according to any of claims 10 to 13, **characterised in that**, after the water treatment is terminated, excess pressure and/or low pressure which still exists in the treatment system (2) is relieved by opening a line (32) that conveys a portion of the water that is under pressure into the water tank (4) below the water level (48) of the water (6) still contained in the water tank (4).

15. Method according to any of claims 10 to 14, **characterised in that** the current consumption of the pump (8) is measured during the water treatment procedure, and the pump (8) is automatically switched off when the current consumption has a predetermined course.

## Revendications

1. Dispositif (2) de purification d'eau potable, comportant un réservoir d'eau (4) pour recevoir l'eau potable à purifier (6), pouvant être retiré du dispositif (2) pour permettre le remplissage avec de l'eau, une pompe (8) pour le transport de l'eau et une unité à membrane filtrante (10), qui présente une entrée d'eau (12), une membrane filtrante (14), une décharge d'eau pure (16), une décharge d'eau de rinçage (18) et un conduit de retour d'eau (26) qui relie la décharge d'eau de rinçage (18) avec le réservoir d'eau (4), l'entrée d'eau (12) étant alimentée directement ou indirectement avec de l'eau à partir du réservoir d'eau (4) par un conduit d'entrée (24) et étant disposée dans la direction de l'écoulement (19) en amont de la membrane filtrante (14), la décharge d'eau pure (16) étant disposée dans la direction de l'écoulement (19) en aval de la membrane filtrante (14), et une partie de l'eau adressée par l'entrée d'eau (12) à l'unité à membrane filtrante (10) quittant l'unité à membrane filtrante (10) par la décharge d'eau de rinçage (18), et un filtre à charbon actif (20) étant disposé en amont de la membrane filtrante (14), **caractérisé par le fait qu**'une partie de l'eau adressée par l'entrée d'eau (12) à l'unité à membrane filtrante (10) est dirigée sur la surface de la membrane filtrante pour l'élimination de dépôts, et du liquide (6) aspiré par la pompe (8) hors du réservoir d'eau (4) est apte à être renvoyé dans le réservoir d'eau (4) par un conduit auxiliaire (32), l'embranchement dans le conduit auxiliaire (32) étant disposé en amont des filtres (20, 14), et le conduit auxiliaire (32) étant apte à être fermé par une soupape (34).

2. Dispositif (2) selon l'une des revendications précédentes, **caractérisé par le fait que**, dans la direction de l'écoulement (19) de l'eau, un clapet anti-retour (30) est disposé entre la décharge d'eau de rinçage (18) et le réservoir d'eau (4).

3. Dispositif (2) selon l'une des revendications précédentes, **caractérisé par le fait que** le dispositif (2) présente un filtre en céramique (22) qui, dans la direction de l'écoulement (19) de l'eau, est disposé en aval de la décharge d'eau pure (16) de l'unité à membrane filtrante (10).

4. Dispositif (2) selon l'une des revendications précédentes, **caractérisé par le fait que**, dans la direction de l'écoulement (19) de l'eau, un capteur de conductivité (36, 38) pour la détermination de la conductivité de l'eau est disposé entre la décharge d'eau de rinçage (18) et le réservoir d'eau (4) et/ou en aval du dernier filtre (22).

5. Dispositif (2) selon l'une des revendications précédentes, **caractérisé par le fait que** le conduit d'entrée (24) entre le réservoir d'eau (4) et la membrane filtrante (14) est apte à être détendu par une soupape (34) à ouvrir ayant une ouverture de décharge de pression (44).

6. Dispositif (2) selon la revendication 5, **caractérisé par le fait que** l'ouverture de décharge de pression (44) est reliée par un conduit de décharge de pression (32) à une ouverture d'entrée (46) du réservoir d'eau (4), qui est disposée au-dessous d'un niveau d'eau (48) minimal dans le réservoir d'eau (4), lequel niveau d'eau minimal est requis pour un fonctionnement du dispositif (2).

7. Dispositif (2) selon l'une des revendications précédentes, **caractérisé par le fait que** le dispositif (2) présente un dispositif de sécurité pour la mise hors circuit automatique de la pompe (8), lequel dispositif de sécurité comporte un capteur pour la mesure de la consommation en courant de la pompe (8) et une unité de commande (42) qui met hors circuit la pompe (8) pour une évolution prédéterminée de la consommation en courant.

8. Dispositif (2) selon l'une des revendications précédentes, **caractérisé par** une unité de commande de la durée qui met de nouveau hors circuit automatiquement la pompe (8) après l'expiration d'un intervalle de temps prédéterminé.

9. Dispositif (2) selon l'une des revendications précédentes, **caractérisé par le fait qu'**est disposé entre le réservoir d'eau (4) et l'unité à membrane filtrante (10) un filtre à charbon actif (20), qui est apte à être contourné par une soupape (50) et un conduit de dérivation (52) et est apte à être séparé complètement de l'écoulement hydraulique.

10. Procédé de purification d'eau potable, suivant lequel de l'eau potable (6) à purifier, stockée dans un réservoir d'eau (4), est conduite à travers un filtre à charbon actif (20) et par la suite est amenée à une membrane filtrante (14), une partie de l'eau est forcée à travers la membrane filtrante (14), le réservoir d'eau (4), pour le remplissage par l'eau, étant séparé d'une pompe (8) et des filtres (14), transporté vers un emplacement de prélèvement pour l'eau à purifier et rempli là avec l'eau,
**caractérisé par le fait que** la partie restante de l'eau amenée rince le côté de la surface de membrane filtrante tourné vers l'eau à purifier et l'eau utilisée pour le rinçage de la surface de membrane filtrante est conduite en retour dans le réservoir d'eau (4) et est adressée de nouveau à la membrane filtrante (14), l'eau aspirée par la pompe (8) hors du réservoir d'eau (4) étant d'abord ramenée complètement pendant un laps de temps prédéterminé par un conduit auxiliaire (32) dans le réservoir (4) pour la purge de la pompe (8) et/ou d'un conduit d'eau (24) entre le réservoir d'eau (4) et la pompe (8), sans s'écouler auparavant à travers l'un des filtres (20, 14).

11. Procédé selon la revendication 10, **caractérisé par le fait que** l'eau à purifier (6) traverse d'abord un filtre à charbon actif (20), puis la membrane filtrante (14) et ensuite un filtre en céramique (22).

12. Procédé selon la revendication 11, **caractérisé par le fait que** le filtre à charbon actif (20) est séparé de l'écoulement hydraulique pour la purification des surfaces de tous les autres constituants (4, 24, 8, 14, 22, 36, 38, 32, 34) qui viennent en contact avec l'eau (6).

13. Procédé selon l'une des revendications 10 à 12, **caractérisé par le fait que** la pureté de l'eau ayant traversé la membrane filtrante (14) et/ou de l'eau de rinçage est mesurée par des capteurs de conductivité (36, 38) et les données de mesure sont exploitées.

14. Procédé selon l'une des revendications 10 à 13, **caractérisé par le fait qu'**après l'achèvement de la purification de l'eau, une surpression et/ou dépression existant encore dans le système de purification (2) est évacuée par ouverture d'un conduit (32), qui introduit dans le réservoir d'eau (4) une partie de l'eau se trouvant sous pression au-dessous du niveau d'eau (48) de l'eau (6) se trouvant encore dans le réservoir d'eau (4).

15. Procédé selon l'une des revendications 10 à 14, **caractérisé par le fait que** la consommation en courant de la pompe (8) est mesurée durant le processus de purification de l'eau et la pompe (8) est mise hors circuit automatiquement pour une évolution prédéterminée de la consommation en courant.
